(19)

Europäisches
Patentamt
European
Patent Office
Office européen
des brevets

(11) **EP 1 911 725 A1**

(12) **EUROPEAN PATENT APPLICATION**
published in accordance with Art. 153(4) EPC

(43) Date of publication:
**16.04.2008 Bulletin 2008/16**

(21) Application number: **06780807.1**

(22) Date of filing: **05.07.2006**

(51) Int Cl.:
**C03B 5/225** (2006.01)     **C03C 3/091** (2006.01)

(86) International application number:
**PCT/JP2006/313431**

(87) International publication number:
**WO 2007/004683 (11.01.2007 Gazette 2007/02)**

(84) Designated Contracting States:
**DE FR**

(30) Priority: **06.07.2005 JP 2005197528**

(71) Applicant: **Asahi Glass Co., Ltd.**
**Tokyo 100-8405 (JP)**

(72) Inventors:
• **NISHIZAWA, Manabu**
**c/o Asahi Glass Company, Limited**
**Tokyo; 1008405 (JP)**
• **KASE, Junichiro**
**c/o Asahi Glass Company, Limited**
**Tokyo; 1008405 (JP)**

• **SAITO, Kenta**
**c/o Asahi Glass Company, Limited**
**Tokyo; 1008405 (JP)**
• **MAEDA, Kei**
**c/o Asahi Glass Company, Limited**
**Tokyo; 1008405 (JP)**
• **MATSUMOTO, Syuji**
**c/o Asahi Glass Company, Limited**
**Tokyo; 1008405 (JP)**

(74) Representative: **Müller-Boré & Partner**
**Patentanwälte**
**Grafinger Strasse 2**
**81671 München (DE)**

(54) **PROCESS FOR PRODUCTION OF NON-ALKALINE GLASS AND NON-ALKALINE GLASS**

(57)    To provide a process for producing an alkali free glass for effectively suppressing bubbles, and an alkali free glass produced by the process, which is suitable as a glass substrate for flat panel displays and has few bubbles.

A process for producing an alkali free glass containing substantially no alkali metal oxide, which comprises melting a glass starting material having a matrix composition of the following composition, and subjecting the molten glass to a treatment process of removing bubbles under reduced pressure, stirring or transferring under a condition where the molten glass is in contact with a platinum member, wherein the starting material is prepared so as to contain $SnO_2$ in an amount of from 0.01 to 2.0% per 100% of the total amount of the above matrix composition; the starting material is melted under heating at from 1,500 to 1,650°C; then bubbles contained in the molten glass are permitted to rise to the surface of the molten glass, together with oxygen bubbles generated by a reduction reaction in which $SnO_2$ in the molten glass is reduced to $SnO$; and in the above treatment process, the oxygen bubbles generated at the interface between the molten glass and the platinum member are permitted to be absorbed by an oxidation reaction in which $SnO$ is oxidized to $SnO_2$, under a condition where the molten glass is from 1,300 to 1,500°C.

Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| $MgO$ | 0 to 6.5%, |
| $CaO$ | 0 to 7.0%, |
| $SrO$ | 4 to 12.5%, |
| $BaO$ | 0 to 2.0%, |
| $MgO+CaO+SrO+BaO$ | 9.0 to 18.0%. |

Fig. 1

**Description**

TECHNICAL FIELD

The present invention relates to a process for producing an alkali free glass with few bubbles, and an alkali free glass plate produced by the process, which is suitable as a substrate glass for flat panel displays and has few bubbles.

BACKGROUND ART

Glass substrates for flat panel displays are classified roughly into an alkali glass containing an alkali metal oxide and an alkali free glass containing substantially no alkali metal oxide. An alkali glass substrate is used for e.g. plasma displays (PDP), inorganic electroluminescence displays, or field emission displays (FED), and an alkali free glass substrate is used for e.g. liquid crystal displays (LCD), or organic electroluminescence displays (OLED).

Among them, in a case of e.g. a glass substrate for LCD, e.g. a thin film of a metal or a metal oxide is formed on its surface, and therefore, the following characteristics are required.

(1) To be an alkali free glass containing substantially no alkali metal ions (for the purpose of preventing deterioration of film properties, caused by diffusion, into a thin film, of alkali metal ions of an alkali metal oxide in a glass substrate.)

(2) To have a high strain point (for the purpose of minimizing deformation or shrinkage of a glass substrate caused by exposing the glass substrate to a high temperature during a step of fabricating a thin film transistor (TFT))

(3) To have an adequate chemical durability against various chemicals to be used for fabrication of TFT. Especially, to have a durability against buffered hydrofluoric acid (BHF: hydrofluoric acid + ammonium fluoride) to be used for etching of $SiO_x$ or $SiN_x$, chemicals containing hydrochloric acid to be used for etching of ITO (tin-doped indium oxide), various acids (e.g. nitric acid, sulfuric acid) to be used for etching of a metal electrode, or a resist-removing basic.

(4) To have no defects (such as bubbles, stria, inclusions, undissolved materials, pits or flaws) inside or on the surface of a glass substrate which affect the display.

In recent years, as the area of a glass substrate for flat panel displays becomes larger, the number of defects per glass substrate becomes large, even when such a glass substrate is one having the same defect density, whereby problems of the decrease in yield have been distinct. Especially, bubbles are mentioned as defects.

Heretofore, a method has been employed, in which bubbles in an alkali free glass are reduced by adding e.g. $As_2O_3$ or $Sb_2O_3$ as a refining agent for reducing bubbles generated when the starting material is melted, to an alkali free glass. Though $As_2O_3$ or $Sb_2O_3$, especially $As_2O_3$, is an extremely excellent refining agent in view of removing bubbles from a molten glass, the load on environment is immense, and therefore, it is required to avoid its use.

Further, a method has been proposed, in which in order to reduce bubbles generated when the starting material is melted, tin oxide is added as a refining agent to the glass starting material, followed by melting the glass starting material under a condition where the ratio of $Sn^{2+}$/total Sn (Sn-redox) in the glass would be at least 0.13 by oxidation-reduction titration (Patent Document 1). Such a method is carried out in such a manner that oxygen gas generated at a reduction reaction in which $SnO_2$ is reduced to SnO, rises to the surface of the molten glass together with very small bubbles in the molten glass so as to remove bubbles.

Further, a method has been proposed in which $SnO_2$ is added to the glass starting material, and the glass starting material is heated at 1,350°C or higher, followed by removing bubbles under a reduced pressure (Patent Document 2). Like the above mentioned method, such a method is carried out in such a manner that under reduced pressure, oxygen gas generated at a reduction reaction of $SnO_2$ will form, together with very small bubbles in the molten glass, large bubbles, which will be permitted to rise to the surface of the molten glass to be removed.

On the other hand, in recent years, platinum which is stable at high temperature is employed in a treatment process for e.g. removing bubbles, stirring or transferring (such as transportation of a molten glass by a channel tube) after the starting material is melted, but there is a problem that oxygen bubbles are newly generated from the interface between the platinum and the molten glass. However, in a conventional method for suppressing generation of bubbles during melting a starting material, the reduction reaction in which $SnO_2$ is reduced to SnO, tends to hardly take place in a treatment process after the melting process, namely, in a process where the molten glass temperature becomes lower than the glass temperature in the melting process. Further, the bubbles generated at the interface of platinum are initially attached to the platinum surface in the form of fine bubbles, and therefore it is difficult to let the fine bubbles rise and be removed together with oxygen bubbles generated by a conventional reduction reaction in which $SnO_2$ is reduced to SnO. Particularly, in resent years, it has been more required to reduce bubbles remaining in a glass substrate for displays, and it has become a new important object to suppress bubbles generated at the interface of platinum.

Patent Document 1: JP-A-2004-75498

Patent Document 2: JP-A-2000-239023

DISCLOSURE OF THE INVENTION

OBJECT TO BE ACCOMPLISHED BY THE INVENTION

It is an object of the present invention to provide a process for producing alkali free glass for effectively suppressing generation of bubbles, which comprises removing bubbles contained in the molten glass during melting the glass starting material, and then removing bubbles generated at the interface between the molten glass and a platinum member (hereinafter, also referred to as "platinum") in a treatment process of removing bubbles under reduced pressure, stirring or transferring under a condition where the molten glass is in contact with the platinum member; and an alkali free glass plate which is suitable as a glass substrate for flat panel displays with few bubbles.

MEANS TO ACCOMPLISH THE OBJECT

The present inventors have conducted various experiments, and as a result, found that an obtainable glass is a prescribed Sn-redox and that a prescribed glass starting material is melted at a prescribed temperature, and bubbles contained in the molten glass are permitted to rise to the surface of the molten glass together with oxygen bubbles generated by a reduction reaction in which $SnO_2$ in the molten glass is reduced to SnO, and in a subsequent treatment process, the oxygen bubbles generated at the interface between the molten glass and the platinum are permitted to be absorbed by an oxidation reaction in which SnO is oxidized to $SnO_2$, under a condition where the molten glass is at a prescribed temperature. The present invention has been accomplished on the basis of these discoveries.

Accordingly, the present invention provides a process for producing an alkali free glass containing substantially no alkali metal oxide, which comprises melting a glass starting material having a matrix composition of the following composition, and subjecting the molten glass to a treatment process of removing bubbles under reduced pressure, stirring or transferring under a condition where the molten glass is in contact with a platinum member, wherein the starting material is prepared so as to contain $SnO_2$ in an amount of from 0.01 to 2.0% per 100% of the total amount of the above matrix composition; the starting material is melted under heating at from 1,500 to 1,650°C; then bubbles contained in the molten glass are permitted to rise to the surface of the molten glass, together with oxygen bubbles generated by a reduction reaction in which $SnO_2$ in the molten glass is reduced to SnO; and in the above treatment process, the oxygen bubbles generated at the interface between the molten glass and the platinum member are permitted to be absorbed by an oxidation reaction in which SnO is oxidized to $SnO_2$, under a condition where the molten glass is from 1,300 to 1,500°C.

Composition as represented by the mass percentage:

|  |  |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| MgO+CaO+SrO+BaO | 9.0 to 18.0%. |

In the process for producing an alkali free glass of the present invention, it is preferred that the removing bubbles under reduced pressure is carried out under a reduced pressure of from 160 to 660 torr.

In the process for producing an alkali free glass of the present invention, it is preferred that the temperature at which the viscosity of the above molten glass becomes $10^2$ dPa·s, is at least 1,600°C.

Further, the present invention provides a float glass plate which is an alkali free glass having a matrix composition of the following composition as represented by the mass percentage based on oxides and containing substantially no alkali metal oxide, and which contains $SnO_2$ in an amount of at least 0.15% and less than 1% per 100% of the total amount of the matrix composition.

Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| MgO+CaO+SrO+BaO | 9.0 to 18.0%. |

The glass plate of the present invention preferably has a thermal expansion coefficient of from $25 \times 10^{-7}$ to $40 \times 10^{-7}/°C$ within a range of from 50 to 350°C.

EFFECTS OF THE INVENTION

In the process for production of the alkali free glass of the present invention, it is possible to carry out removing bubbles contained in the molten glass at the time of melting the glass starting material, and further removing oxygen bubbles generated at the interface between the molten glass and platinum in the subsequent treatment process. Further, the alkali free glass produced, has a small thermal expansion coefficient and extremely few bubbles, and therefore, it is suitable for applications to e.g. a substrate for liquid crystal display panels or a photo mask substrate in which such characteristics are required.

BRIEF DESCRIPTION OF THE DRAWINGS

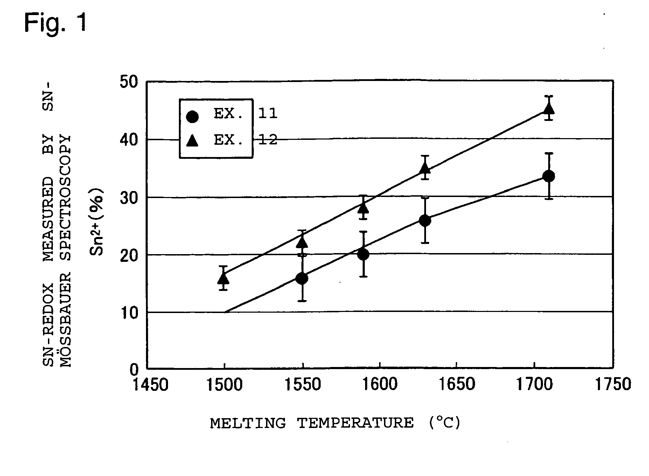

Fig. 1 is a graph showing a relationship between the melting temperature at the time of melting the starting material and the Sn-redox (measured by Sn-Mössbauer spectroscopy) of obtainable glass.

BEST MODE FOR CARRYING OUT THE INVENTION

Hereinafter, the wording of "mass percentage" is sometimes omitted, and the composition as represented by the mass percentage is represented simply by "number (%)" only.

The present invention relates to a process for producing an alkali free glass containing substantially no alkali metal oxide, which comprises melting a glass starting material having a matrix composition of the following composition, and subjecting the molten glass to a treatment process of removing bubbles under reduced pressure, stirring or transferring under a condition where the molten glass is in contact with a platinum member, wherein the starting material is prepared so as to contain $SnO_2$ in an amount of from 0.01 to 2.0% per 100% of the total amount of the above matrix composition; the starting material is melted under heating at a temperature from 1,500 to 1,650°C; then bubbles contained in the molten glass are permitted to rise to the surface of the molten glass, together with oxygen bubbles generated by a reduction reaction in which $SnO_2$ in the molten glass is reduced to SnO; and in the above treatment process, the oxygen bubbles generated at the interface between the molten glass and the platinum member are permitted to be absorbed by an oxidation reaction in which SnO is oxidized to $SnO_2$, under a condition where the molten glass is from 1,300 to 1,500°C.

Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| MgO+CaO+SrO+BaO | 9.0 to 18.0%. |

In the production of the glass, the removing bubbles under reduced pressure is carried out under a reduced pressure of preferably from 160 to 660 torr, more preferably from 200 to 400 torr.

In the present invention, the starting material is melted at a temperature of from 1,500 to 1,650°C, preferably from 1,550 to 1,650°C so that $SnO_2$ is readily reduced to SnO in the molten glass. Accordingly, the glass is prepared to have a matrix composition of $SiO_2$: 58.4 to 66.0%, $Al_2O_3$: 15, 3 to 22 . 0%, $B_2O_3$: 5.0 to 12.0%, MgO: 0 to 6.5%, CaO: 0 to 7.0%, SrO: 4 to 12.5%, BaO: 0 to 2.0% and (MgO+CaO+SrO+BaO): 9.0 to 18.0%, so that the temperature at which the viscosity of the above molten glass becomes $10^2$ dPa·s, would be at least 1,600°C.

Further, the alkali free glass of the present invention is a float glass plate which is an alkali free glass having a matrix composition of the following composition as represented by the mass percentage based on oxides and containing substantially no alkali metal oxide, and which contains $SnO_2$ in an amount of at least 0.15% and less than 1% per 100% of the total amount of the matrix composition.

Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| (MgO+CaO+SrO+BaO) | 9.0 to 18.0%. |

[$SiO_2$]

In the alkali free glass of the present invention, $SiO_2$ is a network former, and is essential. It is preferred that $SiO_2$ is contained in large amount since it is remarkable effects to lower the density of a glass, but if the content of $SiO_2$ is too large, the melting property of the glass will be lowered, and the devitrification temperature will increase. Accordingly, the content is at most 66.0%. On the other hand, if the content of $SiO_2$ is too small, not only the strain point cannot be sufficiently increased, but also the chemical durability deteriorates and the thermal expansion coefficient increases, and therefore, the content is at least 58.4%. The content is preferably from 59.0 to 65.0%, more preferably from 60.0 to 64.0%.

[$Al_2O_3$]

In the alkali free glass of the present invention, $Al_2O_3$ is a component for suppressing the phase separation of the glass, lowering the thermal expansion coefficient, and increasing the strain point. In order to bring about such effects, the content of $Al_2O_3$ is at least 15.3%. On the other hand, if the content of $Al_2O_3$ is too large, the melting property of the glass will deteriorate, and therefore the content of $Al_2O_3$ is at most 22.0%. The content is preferably from 15.8 to 21.0%, more preferably from 16.5% to 20.0%.

[$B_2O_3$]

In the alkali free glass of the present invention, $B_2O_3$ is a component for preventing formation of turbidity due to BHF and lowering the thermal expansion coefficient and the density without increasing the viscosity at a high temperature. If the content of $B_2O_3$ is too small, the BHF resistance will deteriorate, and therefore the content of $B_2O_3$ is at least 5.0%. If such a content is too large, the acid resistance will deteriorate, and the strain point will be lowered at the same time, and therefore the content of $B_2O_3$ is at most 12.0%. The content is preferably from 6.0 to 11.5%, more preferably from 7.0 to 11.0%.

[Alkaline earth metal oxide]

In the alkali free glass of the present invention, among alkaline earth metal oxides, MgO is a preferred component to be incorporated since it is possible to prevent lowering of the strain point while lowering the thermal expansion coefficient. If the content of MgO is too large, the turbidity due to BHF or the phase separation of the glass will be formed, and therefore, the content of MgO is at most 6.5%. The content is preferably from 1.0 to 6.0%, more preferably from 2.0 to 5.0%.

In the alkali free glass of the present invention, CaO is a component for improving the melting property of the glass. If the content of CaO is too large, the thermal expansion coefficient will be high and the devitrification temperature will be high, and therefore, the content of CaO is at most 7.0%, preferably from 1.0 to 6.5%, more preferably from 2.0 to 6.0%.

Further, if the content of CaO exceeds 7.0%, there may be a case where the reduction reaction of $SnO_2$ takes place from near about 1,400°C which is lower than about 1,500°C at which the starting material is melted and vitrified under heating, and therefore, there will be a problem such that a large amount of oxygen bubbles (initial bubbles) is contained in a molten glass when vitrified.

In the alkali free glass of the present invention, SrO is a relatively effective component for suppressing the phase separation of the glass and preventing the turbidity due to BHF. The content of SrO is preferably at least 4.0%. If the content of SrO is too large, the thermal expansion coefficient will increase, and therefore, the content of SrO is at most 12.5%. The content is preferably from 4.5 to 11.0%, more preferably from 5.0 to 10.0%.

Further, if the content of SrO is less than 4%, the reduction reaction of $SnO_2$ takes place from a temperature of near about 1,400°C which is lower than about 1,500°C at which the starting material is melted and vitrified under heating, and therefore, there will be a problem such that a large amount of oxygen bubbles (initial bubbles) is contained in a molten glass when vitrified.

In the alkali free glass of the present invention, BaO is a component for suppressing the phase separation of the glass, improving the melting property of the glass, and suppressing the devitrification temperature. If the content of BaO is too large, there is a strong tendency that the density of the glass will be high, and the thermal expansion coefficient will increase. From the viewpoint that the density is to be more lowered and the thermal expansion coefficient is to be more lowered, it is preferred to adjust the content of BaO to be at most 2.0%, i.e. the content is suppressed to a level to be contained by unavoidably. Such a content is more preferably at most 1.0%.

In the alkali free glass of the present invention, if the total content of alkaline earth metal oxides (RO), namely, the content of (MgO+CaO+SrO+BaO) is too small, it will be difficult to melt the glass, and therefore the content of RO is at least 9.0%. On the other hand, if it is too large, the density of the glass will be high, and therefore, it is at most 18.0%. The content is preferably from 9.5 to 17.0%, more preferably from 10.0 to 16.0%.

[$SnO_2$]

In the present invention, $SnO_2$ added to the glass starting material produces oxygen bubbles by reduction to SnO at the time of melting under heating at a temperature of from 1,500 to 1,650°C. Such oxygen bubbles will rise to and be removed from the surface of the molten glass together with bubbles contained in the molten glass. Further, in the above treatment process, oxygen generated at the interface between the molten glass and platinum is permitted to be absorbed by the above SnO by an oxidation reaction represented by $Sn0+1/2 \cdot O_2 \rightarrow SnO_2$, under a condition where the molten glass is from 1,300 to 1,500°C, whereby defoaming of so-called platinum interface bubbles is carried out.

The effect of removing the above platinum interface bubbles increases as Sn-redox [$Sn^{2+}$/total Sn] in the molten glass increases. Accordingly, the Sn-redox of the glass measured by oxidation-reduction titration is at least 0.3, preferably at least 0.5. Further, the Sn-redox measured by Sn-Mössbauer spectroscopy is at least 0.1. On the other hand, if the Sn-redox is too large, an equipment constituted by platinum tends to be eroded or deteriorated, and therefore, the Sn-redox measured by oxidation-reduction titration is at most 0.8, preferably at most 0.7. Further, the Sn-redox measured by an Sn-Mössbauer spectroscopy is at most 0.3.

Though the added amount of $SnO_2$ in the present invention depends upon the composition of the alkali free glass, it is at least 0.01%, preferably at least 0.05%, more preferably at least 0.1% per 100% of the total amount of the above matrix composition. From the viewpoint that it is possible to more stably remove bubbles in the treatment process, the added amount of $SnO_2$ is more preferably at least 0.15% per 100% of the total amount of the above matrix composition. In addition to the viewpoint that it is possible to more stably remove bubbles in the treatment process, from the viewpoint that it is also possible to more stably remove bubbles at the time of melting the starting material under heating, it is particularly preferably at least 0.2%. On the other hand, if the added amount of $SnO_2$ is too large, the effect of removing bubbles tends to be saturated, and the characteristics of the glass tend to be influenced, and further, in a case of forming it into a glass plate by a float process, $SnO_2$ tends to be reduced in a float forming zone thereby to deposit Sn on the glass surface, and therefore, the added amount of $SnO_2$ is at most 2.0%, preferably less than 1.0%, more preferably at most 0.6%, per 100% of the total amount of the matrix composition.

From the viewpoint that it is possible to constantly suppress the deposition of Sn on the glass surface, it is more preferably at most 0.5%.

Further, in the case of removing bubbles under reduced pressure in the treatment process, from the viewpoint that it is possible to suppress glass defects at the time of removing bubbles under reduced pressure, the content of $SnO_2$ is particularly preferably at most 0.25% per 100% of the total amount of the matrix composition.

For such a reason, in the case of forming the molten glass into a glass plate by the float process, in order to obtain the stabilized glass quality, the content of $SnO_2$ is at least 0.15%, preferably less than 1%, more preferably from 0.15 to 0.5%, furthermore preferably from 0.2 to 0.5%, per 100% of the total amount of the matrix composition.

Further, in the case of removing bubbles under reduced pressure in the treatment process and followed by forming into a glass plate by a float process, in order to obtain the stabilized glass quality, the content of $SnO_2$ is more preferably from 0.15 to 0.25%, particularly preferably from 0.2 to 0.25% per 100% of the total amount of the matrix composition.

The essential component to be added to the glass starting material of the present invention is $SnO_2$, but it is effective to further added e.g. $SO_3$, $Fe_2O_3$, Cl or F to the starting material, since the removal of bubbles and the refining effect of the glass will thereby be accelerated and strengthened.

[$SO_3$]

$SO_3$ is a component which generates a large amount of bubbles by decomposition and further makes bubbles large during heating the glass starting material. An $SO_3$ source may be any salt so long as it is a free alkali, and usually, it is added in a form of a sulfate of an alkaline earth metal. The effect of removing bubbles due to $SO_3$ can be obtained by adding $SO_3$ in an amount of at least 0.01% per 100% of the total amount of the above matrix composition. The added amount of $SO_3$ is preferably at least 0.1%, more preferably at least 0.3%. On the other hand, if the added amount of $SO_3$ is too large, generation of oxygen bubbles due to the decomposition of $SO_3$ becomes excessive, and therefore, such an amount is at most 5.0%, preferably at most 2.0%, more preferably at most 1.0%.

[$Fe_2O_3$]

$Fe_2O_3$ generates oxygen bubbles by a reduction reaction represented by $Fe_2O_3 \rightarrow 2FeO+1/2 \cdot O_2$ at the time of melting the glass starting material, and such oxygen bubbles will rise to and be removed from the surface of the molten glass, together with bubbles in the glass. By adding $Fe_2O_3$ in an amount of at least 0.01% per 100% of the total amount of the above matrix composition, it is possible to obtain the effect of removing bubbles, but such an amount is preferably at least 0.02%. Such an amount is at most 2.0%, preferably at most 1.0%, more preferably at most 0.1%, considering that otherwise the saturation of the effect of removing bubbles and the coloration of the glass will be remarkable due to $Fe_2O_3$.

[F, Cl]

F or Cl is a component which generates a large amount of bubbles and further makes bubbles large, at the time of melting the glass starting material, and when such a component is used in combination with $SO_3$ or $Fe_2O_3$, such an effect of removing bubbles exponentially increases. F or Cl is usually added in the form of a fluoride or chloride of an alkaline earth metal. The amount to be added is at least 0.01%, preferably at least 0.05%, more preferably at least 0.1% per 100% of the total amount of the above matrix composition. On the other hand, the refining effect tends to be saturated and the characteristics of the glass tend to be influenced by F or Cl, and therefore, such an amount is at most 5.0%, preferably at most 2.0%, more preferably at most 1.0%.

In the present invention, it is preferred that such components are added as $SO_3$ and/or $Fe_2O_3$, and Cl and/or F. With regard to the added amount of such components, $SO_3$ and/or $Fe_2O_3$, and Cl and/or F are added in an amount of preferably at least 0.01% in total, per 100% of the total amount of the above matrix composition, and it is particularly preferred that the added amount of $SO_3$ and/or $Fe_2O_3$ is at least 0.01% in total, and the added amount of Cl and/or F is at least 0.01% in total.

[Production process of glass]

The alkali free glass of the present invention is produced by e.g. a process as mentioned below. A glass starting material was prepared so as to have the composition as mentioned above. The glass starting material obtained is continuously charged into a glass melting bath, and melted under heating at from 1,500 to 1,650°C, preferably from 1,550 to 1,650°C, then bubbles contained in the molten glass are permitted to rise to the surface of the molten glass, together with oxygen bubbles generated by a reduction reaction in which $SnO_2$ in the molten glass is reduced to SnO, and in the treatment process of removing bubbles under reduced pressure, stirring or transferring under a condition where the molten glass is in contact with a platinum member, the oxygen bubbles generated at the interface between the molten glass and the platinum are permitted to be absorbed and removed by an oxidation reaction in which SnO is oxidized to $SnO_2$, under a condition where the molten glass is from 1,300 to 1,500°C. Then, in a forming process, the glass is formed into a plate with a prescribed thickness by a plate glass forming process such as a float process, and then annealed and cut into a glass plate having a desired size. Further, the Sn-redox of the glass thus obtainable, measured by oxidation-reduction titration, is from 0.3 to 0.8, preferably from 0.5 to 0.7. Further, the Sn-redox measured by Sn-Mössbauer spectroscopy is from 0.1 to 0.3.

[Pressure]

In the production of the alkali free glass of the present invention, when the absolute pressure is reduced in an atmosphere where the molten glass is placed, bubbles contained in the molten glass or bubbles attached to the platinum interface are swelled, whereby such bubbles will readily rise to the surface of the molten glass. Accordingly, in the production of the glass of the present invention, it is preferred that bubbles are removed under reduced pressure. Particularly, in a case of a high-viscous glass, namely, a glass having a temperature at which the viscosity becomes $10^2$ dPa·s of at least 1,600°C, it is preferred that the bubbles are removed under reduced pressure. Specifically, the absolute pressure is from 160 to 660 torr, more preferably from 200 to 400 torr. Further, it was confirmed under a pressure of from 160 to 760 torr that, even under reduced pressure, there is no lowering in the effect of absorbing and removing oxygen bubbles generated at the interface between the molten glass of the present invention and platinum by an oxidation reaction in which SnO is oxidized to $SnO_2$.

β-OH of the alkali free glass of the present invention is from 0.25 to 0.6 $mm^{-1}$, preferably from 0.3 to 0.5 $mm^{-1}$. If β-OH exceeds 0.6 $mm^{-1}$, bubbles are likely to be generated at the above platinum interface. β-OH is a value obtained in such a manner that the infrared transmittance of the alkali free glass plate is measured, and then the infrared transmittance ($I_0$) at 4,000 $cm^{-1}$, the minimum infrared transmittance (I) in the vicinity of 3,570 $cm^{-1}$ and the glass thickness (d), are identified so as to calculate the value from the following formula

$$\beta\text{-}OH = (1/d)\log(I_0)/(I).$$

Such an value is an index for the water content in the glass.

Further, in the alkali free glass of the present invention, the thermal expansion coefficient at a temperature of from 50 to 350°C is preferably from $25 \times 10^{-7}$ to $40 \times 10^{-7}$/°C.

EXAMPLES

In Table 1, with regard to components prepared as an industrial glass starting material, and in Table 2, with regard to a glass obtained, the contents of respective components per 100% of the total amount of the matrix composition comprising $SiO_2$ $Al_2O_3$, $B_2O_3$, MgO, CaO, SrO and BaO are represented by the mass percentage.

Examples 1 to 4 and Example 6 show Examples of the present invention, and Example 5 shows Comparative Example.

The starting material having the composition shown in Table 1 was put into a platinum crucible and melted under heating at a temperature of from 1,500 to 1,650°C. Then, a molten glass was cast on a carbon plate so as to form a plate. Then, each of 20 g of plate glasses was put into the platinum crucible, and melted under atmospheric pressure (760 torr) at 1,420°C for 4 hours, and then annealed to obtain the glass shown in Table 2.

With regard to the glass plate obtained, the volume of bubbles, Sn-redox and amount of each remaining component were measured and analyzed by the following methods. The results thereof were shown in Table 2 together with β-OH, the thermal expansion coefficient and the temperature at which the viscosity becomes $10^2$ dPa·s.

Sn-redox is a value obtained by measuring the amount of $Sn^{2+}$ in a molten glass by oxidation-reduction titration, followed by calculation by [amount of $Sn^{2+}$/total Sn].

The volume of bubbles is a value obtained by measuring the volume ($cm^3/m^2$) of bubbles generated per unit area of bubbles newly generated and grown at the bottom of the platinum crucible. The volume of bubbles was measured from the radius of the bubble photographed directly by a camera, on the assumption that such a bubble is in a form of a hemisphere. In a case where the volume of bubbles is small, it means that the effect of absorbing oxygen bubbles at the platinum interface by an oxidation reaction in which SnO is oxidized to $SnO_2$, becomes large.

The amounts of the remaining components of $SnO_2$, $SO_3$, $Fe_2O_3$, F and Cl in the glass were measured by an X-ray fluorescence spectrometer.

When Examples 1 to 4 and Example 5 are compared, it is obvious that the effect of removing bubbles increases as the amount of $SnO_2$ added to the glass starting material increases.

Further, under a reduced pressure of from 160 to 660 torr, particularly from 200 to 400 torr, the effect of removing bubbles further increases.

Further, when Examples 1 to 4, and Example 6 and Example 5 are compared, the effect of removing bubbles increases in a case where the amount of $SnO_2$ added to the glass starting material is at least 0.15%, and in a case of at least 0.25%, the effect of removing bubbles becomes more remarkable.

Further, as shown in Tables 1 and 2, the proportion of $SnO_2$ added to the starting material and the proportion of $SnO_2$ contained in the glass obtained were almost the same.

TABLE 1

| (Mass%) | Ex. 1 | Ex. 2 | Ex. 3 | Ex. 4 | Ex. 5 | Ex. 6 |
|---|---|---|---|---|---|---|
| $SiO_2$ | 60 | 60 | 60 | 60 | 60 | 60 |
| $Al_2O_3$ | 17 | 17 | 17 | 17 | 17 | 17 |
| $B_2O_3$ | 8 | 8 | 8 | 8 | 8 | 8 |
| MgO | 3 | 3 | 3 | 3 | 3 | 3 |
| CaO | 4 | 4 | 4 | 4 | 4 | 4 |
| SrO | 8 | 8 | 8 | 8 | 8 | 8 |
| BaO | 0 | 0 | 0 | 0 | 0 | 0 |
| $SnO_2$ | 0.16 | 0.25 | 0.36 | 0.42 | 0 | 0.11 |
| $SO_3$ | 0.36 | 0.36 | 0.36 | 0.36 | 0.36 | 0.36 |
| $Fe_2O_3$ | 0.07 | 0.07 | 0.07 | 0.07 | 0.07 | 0.07 |
| F | 0.14 | 0.14 | 0.14 | 0.14 | 0.14 | 0.14 |
| Cl | 0.5 | 0.5 | 0.5 | 0.5 | 0.5 | 0.5 |

TABLE 2

| (Mass%) | Ex.1 | Ex. 2 | Ex. 3 | Ex. 4 | Ex. 5 | Ex. 6 |
|---|---|---|---|---|---|---|
| $SiO_2$ | 60 | 60 | 60 | 60 | 60 | 60 |
| $Al_2O_3$ | 17 | 17 | 17 | 17 | 17 | 17 |
| $B_2O_3$ | 8 | 8 | 8 | 8 | 8 | 8 |
| MgO | 3 | 3 | 3 | 3 | 3 | 3 |
| CaO | 4 | 4 | 4 | 4 | 4 | 4 |
| SrO | 8 | 8 | 8 | 8 | 8 | 8 |
| BaO | 0 | 0 | 0 | 0 | 0 | 0 |
| $SnO_2$ | 0.16 | 0.25 | 0.36 | 0.42 | 0 | 0.11 |
| $SO_3$ | 0.001 | 0.001 | 0.001 | 0.001 | 0.001 | 0.001 |
| $Fe_2O_3$ | 0.07 | 0.07 | 0.07 | 0.07 | 0.07 | 0.07 |
| F | 0.04 | 0.04 | 0.04 | 0.04 | 0.04 | 0.04 |
| Cl | 0.12 | 0.12 | 0.12 | 0.12 | 0.12 | 0.12 |
| $\beta$-OH [$mm^{-1}$] | 0.403 | 0.403 | 0.395 | 0.312 | 0.356 | Not measured |
| Volume of bubbles ($cm^3/m^2$) | 124 | 48 | 55 | 5 | 316 | 280 |
| Thermal expansion coefficient ($\times 10^{-7}$/°C) | 38 | 38 | 38 | 38 | 38 | 38 |
| Temperature (°C) at which the viscosity becomes $10^2$ dPa·s | 1660 | 1660 | 1660 | 1660 | 1660 | 1660 |
| Sn-redox (oxidation-reduction titration) | 0.38 | 0.41 | 0.53 | Not measured | - | Not measured |

Now, the evaluation of the number of bubbles contained in the molten glass will be described as follows.

In Table 3, with regard to components prepared as an industrial glass starting material and in Table 4, with regard to a glass obtained, the contents of respective components per 100% of the total amount of the matrix composition comprising $SiO_2$, $Al_2O_3$, $B_2O_3$, MgO, CaO, SrO and BaO are represented by the mass percentage.

Examples 8 and 10 show Examples of the present invention, and Examples 7 and 9 show Comparative

Examples.

The starting materials (Example 7 to Example 10) having compositions shown in Table 3 were respectively put into different 300 cc platinum crucibles, and then left to stand in an electric furnace and melted at 1,500°C for 30 minutes, and then transferred to an electric furnace having a temperature shown in Table 4, and left to stand for hours shown in Table 4 (five types of from 15 to 120 minutes). Then, such a melt was transferred to an electric furnace with a temperature of 760°C, and a glass obtained was annealed to 560°C over a period of 2 hours, and further the glass was annealed to room temperature over a period of about 10 hours. The glass at the upper central portion of the crucible was taken out with a core drill so as to obtain a cylindrical glass with a diameter of 38 mm and a height of 35 mm, followed by cutting into a glass plate having a thickness of from 2 to 5 mm containing a central axis of the cylindrical glass. Both surfaces which were cut, were subjected to optical polishing (mirror polishing). With regard to a portion corresponding to 1 to 10 mm from the upper surface of the glass in the crucible, the surface subjected to the optical polishing was observed by a stereoscopic microscope, the number of bubbles having a diameter of at least 50 $\mu$m in the glass plate was measured, and the number was divided by a volume of the glass plate to obtain the number of bubbles. The results are shown in Table 4.

TABLE 3

| Table 3 | | |
|---|---|---|
| (Mass%) | Ex. 7 and 9 | Ex. 8 and 10 |
| $SiO_2$ | 60 | 60 |
| $Al_2O_3$ | 17 | 17 |
| $B_2O_3$ | 8 | 8 |
| MgO | 3 | 3 |
| CaO | 4 | 4 |
| SrO | 8 | 8 |
| BaO | 0 | 0 |
| $SnO_2$ | 0 | 0.16 |
| $SO_3$ | 0.36 | 0.36 |
| $Fe_2O_3$ | 0.07 | 0.07 |
| F | 0.14 | 0.14 |
| Cl | 0.5 | 0.5 |

TABLE 4

| Table 4 | | | | |
|---|---|---|---|---|
| | Number of bubbles (number/cm$^3$) | | | |
| (Mass%) | Ex. 7 | Ex. 8 | Ex. 9 | Ex. 10 |
| $SiO_2$ | 60 | 60 | 60 | 60 |
| $Al_2O_3$ | 17 | 17 | 17 | 17 |
| $B_2O_3$ | 8 | 8 | 8 | 8 |
| MgO | 3 | 3 | 3 | 3 |
| CaO | 4 | 4 | 4 | 4 |
| SrO | 8 | 8 | 8 | 8 |
| BaO | 0 | 0 | 0 | 0 |
| $SnO_2$ | 0 | 0.16 | 0 | 0.16 |
| $SO_3$ | 0.001 | 0.001 | 0.001 | 0.001 |
| $Fe_2O_3$ | 0.07 | 0.07 | 0.07 | 0.07 |
| F | 0.04 | 0.04 | 0.04 | 0.04 |
| Cl | 0.12 | 0.12 | 0.12 | 0.12 |
| Temp. (°C) | 1500 | 1500 | 1590 | 1590 |

(continued)

| Table 4 | | | | | |
|---|---|---|---|---|---|
| | | Number of bubbles (number/cm$^3$) | | | |
| (Mass%) | | Ex. 7 | Ex. 8 | Ex. 9 | Ex. 10 |
| Time (min) | 15 | - | - | 3057 | 1881 |
| | 30 | - | - | 1046 | 180 |
| | 45 | 3378 | 2942 | 280 | 17 |
| | 90 | 587 | 698 | 30 | 7 |
| | 120 | 465 | 305 | - | - |

As evident from the results shown in Table 4, in the case where the temperature was 1,500°C, the effect of reducing the number of bubbles due to $SnO_2$ was somewhat observed as shown in Examples 7 and 8, but on the other hand, in the case of 1,590°C, the effect of reducing the number of bubbles due to $SnO_2$ was remarkably observed as shown in Examples 9 and 10.

This shows that in the process where the molten glass temperature is increased from 1,500°C to 1,590°C, the bubbles contained in the molten glass are permitted to rise to and be removed from the surface of the molten glass, together with oxygen bubbles generated by a reduction reaction in which $SnO_2$ is reduced to SnO, whereby the number of bubbles are remarkably reduced.

Now, the relationship between the melting temperature at the time of melting the starting material and Sn-redox of the glass will be described as follows.

In Table 5, with regard to components prepared as an industrial glass starting material, and in Table 6, with regard to a glass obtained, the contents of respective components per 100% of the total amount of the matrix composition comprising $SiO_2$ $Al_2O_3$, $B_2O_3$, MgO, CaO, SrO and BaO are represented by the mass percentage. Example 11 represents an Example of the present invention, and Example 12 represents a Comparative Example.

The starting material having a composition shown in Table 5 was put into a platinum crucible, and left to stand in an electric furnace at 1,500°C for 30 minutes to obtain a molten glass, and then transferred to an electric furnace having a prescribed temperature (1, 500°C, 1, 550°C, 1, 590°C, 1,630°C, 1,710°C), and then left to stand for 30 minutes. Then, the molten glass was transferred to an electric furnace of 760°C, the glass was annealed to 560°C over a period of 2 hours, and further the glass was annealed to room temperature over a period of about 10 hours.

The proportion of $SnO_2$ added to the starting material and the proportion of $SnO_2$ contained in the glass obtained were almost the same.

TABLE 5

| Table 5 | | |
|---|---|---|
| (Mass %) | Ex.11 | Ex. 12 |
| $SiO_2$ | 60 | 62 |
| $Al_2O_3$ | 17 | 17 |
| $B_2O_3$ | 8 | 11 |
| MgO | 3 | 1 |
| CaO | 4 | 8 |
| SrO | 8 | 1 |
| BaO | 0 | 0 |
| $SnO_2$ | 0.16 | 0.16 |
| $SO_3$ | 0.36 | 0.36 |
| $Fe_2O_3$ | 0.07 | 0.07 |
| F | 0.14 | 0.14 |
| Cl | 0.5 | 0.5 |

TABLE 6

| Table 6 | | |
|---|---|---|
| (Mass %) | Ex. 11 | Ex. 12 |
| $SiO_2$ | 60 | 62 |
| $Al_2O_3$ | 17 | 17 |
| $B_2O_3$ | 8 | 11 |
| MgO | 3 | 1 |
| CaO | 4 | 8 |
| SrO | 8 | 1 |
| BaO | 0 | 0 |
| $SnO_2$ | 0.16 | 0.16 |
| $SO_3$ | 0.001 | 0.001 |
| $Fe_2O_3$ | 0.07 | 0.07 |
| F | 0.04 | 0.04 |
| Cl | 0.12 | 0.12 |
| Temperature (°C) at which the viscosity becomes $10^2$ dPa·s | 1660 | 1690 |

Further, with regard to such a glass, the value of Sn-redox was measured by means of Sn-Mössbauer spectroscopy. With regard to the respective glasses, a graph showing the value of Sn-redox against the prescribed melting temperature is shown in Fig. 1.

Here, the measurement of Sn-Mössbauer spectroscopy will be described.

By employing, as a probe, $\gamma$-ray (23.8 keV) generated along with energy transition from $^{119m}$Sn to $^{119}$Sn, the abundance ratio (Sn-redox) of each of bivalent Sn and tetravalent Sn in the sample was measured by a transmission method (measurement of $\gamma$-ray transmitted through the glass sample). Specifically, such measurement is carried out as follows.

A $\gamma$-ray outlet of a radioactive source, a glass sample, a Pd filter and a window of a gas amplification proportional counter (manufactured by LND K.K., model No. 45431) were placed on a straight line with a length of from 300 to 800 mm.

By using $^{119m}$Sn of 10 mCi as the radioactive source, the radioactive source was moved to an axial direction of an optical system, and the energy change of $\gamma$-ray was caused by the Doppler effect. By using a transducer (manufactured by Toyo Research K.K.), the speed of the radioactive source was adjusted for vibration at a speed of from -10 to +10 mm/sec to the axial direction of the optical system.

As the glass sample, a glass flat plate with a thickness of from 3 to 7 mm was used.

A Pd filter is one to be used for improving the measurement accuracy of $\gamma$-ray by using the gas amplification proportional counter, and is a 50 $\mu$m-thick Pd foil to remove characteristic X-ray generated from the glass sample at the time of irradiation of the glass sample with $\gamma$-ray.

The gas amplification proportional counter is one for detecting $\gamma$-ray at the window. An electrical signal showing the amount of $\gamma$-ray obtained from the gas amplification proportional counter was amplified by an amplification device (manufactured by Kansai Electronic Co., Ltd.) to detect a photo-receiving signal. Such a signal was worked with the above information of the speed by a multichannel analyzer (CMCA550, manufactured by Wissel K.K.)

By plotting the signal detected from the gas amplification proportional counter along the abscissa and the moving speed of radioactive source along the ordinate, it is possible to obtain the spectrum (Basis and Application of Mössbauer Spectroscopy, page 45 to 64, co-author Hirotoshi Sano and Motomi Katada, Japan Scientific Societies Press). An integration period of from 2 to 16 days was required until a ratio of signal/noise which can be evaluated, was obtained.

The peak which appears in the vicinity of 0 mm/sec shows the presence of tetravalent Sn, and the splitted two peaks which appear in the vicinity of 2.5 mm/sec and 4.5 mm/sec show the presence of bivalent Sn. The proportion obtained by multiplying each of peak areas by the fudge factor (Journal of Non-Crystalline Solids 337 (2004), pages 232 to 240 "The effect of alumina on the Sn2+/Sn4+ redox equilibrium and the incorporation of tin in Na2O/Al2O3/SiO2 melts" Darja Benner, and other coauthors) (tetravalent Sn: 0.22, bivalent Sn: 0.49) was calculated, whereby the proportion of bivalent Sn was regarded as Sn-redox value.

In Fig. 1, as the melting temperature increases, the amount of $Sn^{2+}$ in the glass becomes larger, and this shows that the reduction reaction in which $SnO_2$ is reduced to SnO in the molten glass becomes active by the increase of the melting temperature.

In Example 12 shown in Fig. 1, the starting material is heated, the reduction reaction in which $SnO_2$ is reduced

to SnO takes place from near about 1,400°C, and the reduction reaction in which $SnO_2$ is reduced to SnO is activated from near about 1,450°C (Sn-redox obtained by measurement of Sn-Mössbauer Spectroscopy is about 10%), and therefore, in the vicinity of 1,500°C at which the starting material is vitrified, oxygen bubbles (initial bubbles) generated by the reduction reaction is already generated in a large amount in the molten glass.

Further, the present inventors have found a problem of deterioration of the productivity since the bubbles in the molten glass and the initial bubbles coexist in the system in the vicinity of 1,500°C at which the starting material is vitrified, thereby form coexisting bubbles, and therefore it is required to let the molten glass remain in the melting bath for a long period to remove the coexisting bubbles from the molten glass.

On the other hand, in Example 11 shown in Fig. 1, the reduction reaction in which $SnO_2$ is reduced to SnO starts to take place from near about 1,450°C, and thus the initial bubbles are not generated so much at a temperature of from 1,450 to 1,500°C. Thereafter, the reduction reaction in which $SnO_2$ is reduced to SnO is activated from near about 1,500°C (Sn-redox obtained by measuring Sn-Mössbauer Spectroscopy is about 10%) at which the starting material is vitrified, whereby it is possible to effectively permit the bubbles in the molten glass to rise. Further, as shown in Table 6, in Example 11, the temperature at which the viscosity becomes 102 dPa·s is lower than Example 12, and therefore the bubbles in Example 11 are also likely to rise.

Accordingly, in the process for producing an alkali free glass and the alkali free glass of the present invention, it takes short time for the presence of an molten glass in a melting bath, and the productivity is also excellent.

In the process for producing the alkali free glass and the alkali free glass of the present invention, bubbles are not substantially contained, and therefore it is suitable for a glass substrate for flat panel displays.

Particularly, in the float glass plate of the alkali free glass of the present invention which is formed by a float process, few bubbles are contained and no deposition of Sn is observed on the glass surface, and therefore it is suitable for a glass substrate for flat panel displays with a large area and further of a thin plate (for example 0.3 to 1.1 mm).

Industrial applicability

The alkali free glass produced by the present invention has very few bubbles since bubbles contained in a molten glass at the time of melting a glass starting material and further oxygen bubbles generated at the interface between the molten glass and platinum in a subsequent treatment process are removed, and therefore such an alkali free glass is particularly suitable for applications to e.g. a glass substrate for liquid crystal displays.

The entire disclosure of Japanese Patent Application No. 2005-197528 filed on July 6, 2005 including specification, claims, drawings and summary is incorporated herein by reference in its entirety.

**Claims**

1. A process for producing an alkali free glass containing substantially no alkali metal oxide, which comprises melting a glass starting material having a matrix composition of the following composition, and subjecting the molten glass to a treatment process of removing bubbles under reduced pressure, stirring or transferring under a condition where the molten glass is in contact with a platinum member, wherein the starting material is prepared so as to contain $SnO_2$ in an amount of from 0.01 to 2.0% per 100% of the total amount of the above matrix composition; the starting material is melted under heating at from 1,500 to 1,650°C; then bubbles contained in the molten glass are permitted to rise to the surface of the molten glass, together with oxygen bubbles generated by a reduction reaction in which $SnO_2$ in the molten glass is reduced to SnO; and in the above treatment process, the oxygen bubbles generated at the interface between the molten glass and the platinum member are permitted to be absorbed by an oxidation reaction in which SnO is oxidized to $SnO_2$, under a condition where the molten glass is from 1,300 to 1,500°C. Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| MgO+CaO+SrO+BaO | 9.0 to 18.0%. |

**2.** The process for producing an alkali free glass according to Claim 1, wherein the removing bubbles under reduced pressure is carried out under a reduced pressure of from 160 to 660 torr.

**3.** The process for producing an alkali free glass according to Claim 1 or 2, wherein the temperature at which the viscosity of the above molten glass becomes $10^2$ dPa·s, is at least 1,600°C.

**4.** An alkali free glass plate produced by the process as defined in any one of Claims 1 to 3.

**5.** A float glass plate which is an alkali free glass having a matrix composition of the following composition as represented by the mass percentage based on oxides and containing substantially no alkali metal oxide, and which contains $SnO_2$ in an amount of at least 0.15% and less than 1% per 100% of the total amount of the matrix composition. Composition as represented by the mass percentage:

| | |
|---|---|
| $SiO_2$ | 58.4 to 66.0%, |
| $Al_2O_3$ | 15.3 to 22.0%, |
| $B_2O_3$ | 5.0 to 12.0%, |
| MgO | 0 to 6.5%, |
| CaO | 0 to 7.0%, |
| SrO | 4 to 12.5%, |
| BaO | 0 to 2.0%, |
| MgO+CaO+SrO+BaO | 9.0 to 18.0%. |

**6.** The alkali free glass plate according to Claim 4 or 5, which has a thermal expansion coefficient of from $25 \times 10^{-7}$ to $40 \times 10^{-7}$/°C within a range of from 50 to 350°C.

Fig. 1

## INTERNATIONAL SEARCH REPORT

| | International application No. |
|---|---|
| | PCT/JP2006/313431 |

**A. CLASSIFICATION OF SUBJECT MATTER**
*C03B5/225*(2006.01)i, *C03C3/091*(2006.01)i

According to International Patent Classification (IPC) or to both national classification and IPC

**B. FIELDS SEARCHED**

Minimum documentation searched (classification system followed by classification symbols)
C03B5/225, C03C1/00-14/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-284949 A (Asahi Glass Co., Ltd.),<br>14 October, 2004 (14.10.04),<br>Claims; Par. Nos. [0019] to [0025]; examples 15<br>to 17<br>(Family: none) | 1-6<br>1-4 |
| X<br>Y | JP 10-324526 A (Asahi Glass Co., Ltd.),<br>08 December, 1998 (08.12.98),<br>Claims; Par. Nos. [0018] to [0024]; examples 15<br>to 17<br>(Family: none) | 1-6<br>1-4 |
| X<br>Y | JP 2004-75498 A (Nippon Electric Glass Co.,<br>Ltd.),<br>11 March, 2004 (11.03.04),<br>Full text<br>(Family: none) | 5,6<br>1-4 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 August, 2006 (10.08.06) | Date of mailing of the international search report<br>22 August, 2006 (22.08.06) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004075498 A
- JP 2000239023 A

- JP 2005197528 A

**Non-patent literature cited in the description**

- **HIROTOSHI SANO ; MOTOMI KATADA.** Basis and Application of Mössbauer Spectroscopy. Japan Scientific Societies Press, 45-64

- **DARJA BENNER.** The effect of alumina on the Sn2+/Sn4+ redox equilibrium and the incorporation of tin in Na2O/Al2O3/SiO2 melts. *Journal of Non-Crystalline Solids,* 2004, vol. 337, 232-240